(19) Europäisches Patentamt
European Patent Office
Office européen des brevets

(11) **EP 2 202 288 A1**

(12) **DEMANDE DE BREVET EUROPEEN**

(43) Date de publication:
**30.06.2010 Bulletin 2010/26**

(51) Int Cl.:
*C11C 3/04* (2006.01)       *C10L 1/02* (2006.01)
*B01D 61/14* (2006.01)      *B01J 19/24* (2006.01)

(21) Numéro de dépôt: **09290890.4**

(22) Date de dépôt: **30.11.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **23.12.2008 FR 0807415**

(71) Demandeur: **IFP**
**92852 Rueil-Malmaison Cédex (FR)**

(72) Inventeurs:
• **Baudot, Arnaud**
  **69390 Vernaison (FR)**
• **Bournay, Laurent**
  **69440 Chaussan (FR)**
• **Toth, Eszter**
  **69008 Lyon (FR)**

(54) **Procédé de fabrication d'esters alkyliques à partir d'huile végétale ou animale et d'un monoalcool aliphatique utilisant une séparation membranaire**

(57)    La présente invention décrit un procédé de production d'esters alkyliques d'acides gras et de glycérine, mettant en oeuvre un ensemble de réactions de transestérification entre une huile végétale ou animale et un monoalcool aliphatique en présence d'un catalyseur solide hétérogène de manière à obtenir un effluent comportant au moins des esters alkyliques, du glycérol libre, du glycérol lié et de l'alcool, dans lequel on réalise au moins une étape de séparation d'au moins une portion de l'effluent de manière à séparer l'ester produit et le glycérol lié, ladite séparation se faisant par membrane.

L'invention décrit l'installation dans laquelle on met en oeuvre ledit procédé de production d'esters alkyliques.

EP 2 202 288 A1

Figure 2

**Description**

## DOMAINE DE L'INVENTION

L'invention concerne un procédé amélioré de fabrication d'esters alkyliques à partir d'huiles végétales ou animales et d'un monoalcool aliphatique.

## ART ANTÉRIEUR

En vue de leur utilisation comme biocarburant, les esters alkyliques d'huiles végétales sont produits à partir d'huiles végétales issues par exemple de colza, de tournesol, de soja ou même de palme. Mal adaptées à l'alimentation directe des moteurs diesel modernes des véhicules particuliers, les huiles végétales constituées essentiellement de triglycérides doivent être transformées par une réaction de transestérification avec un alcool, par exemple le méthanol ou l'éthanol, introduit en excès pour produire des esters méthyliques ou éthyliques d'huiles végétales (EMHV ou EEHV) et de la glycérine.

Le procédé Esterfip-H™ développé par l'IFP et décrit dans la demande de brevet EP-1 352 893 permet d'obtenir un biodiesel et une glycérine de très bonne qualité, avec des rendements élevés. Le schéma de principe de ce procédé consiste en deux réacteurs de transestérification à lit fixe utilisant un catalyseur hétérogène solide, fonctionnant en continu et installés en série ce qui permet de maximiser la conversion. L'effluent issu du premier réacteur est soumis à une évaporation partielle pour éliminer l'excès de méthanol introduit. Ainsi la glycérine formée est rendue insoluble et peut être séparée par décantation. L'élimination de la glycérine permet de déplacer favorablement l'équilibre réactionnel et maximiser la conversion dans le deuxième réacteur.

La norme européenne actuelle sur les biocarburants EN 14 214 impose des teneurs maximales en méthanol, eau, glycérol libre ainsi qu'en mono-, di- et triglycérides : 0,2% masse pour le méthanol, 500 mg/kg pour l'eau, 0,02 % masse de glycérol libre, 0,8% masse en monoglycérides et 0.2% masse en di- et triglycérides.

Par glycérol, on entend la molécule du tri-alcool ayant trois atomes de carbone dont la formule chimique est $C_3H_8O_3$.

Le glycérol libre, par opposition au glycérol lié, est défini comme étant une molécule de glycérol totalement détachée de toute chaîne carbonée et de formule $C_3H_8O_3$.

On parle de glycérol lié lorsque le groupement fonctionnel du glycérol $C_3H_8O_3$ se retrouve alkylé à une ou plusieurs chaînes d'acides gras donnant des molécules de monoglycérides, diglycérides ou triglycérides.

Dans le cas particulier du procédé Esterfip-H™, les esters méthyliques et le glycérol sont très peu solubles et le méthanol présent joue le rôle de co-solvant. Donc la teneur en glycérol dans la phase ester est d'autant plus importante que la température est élevée et que la teneur en méthanol est forte.

Par ailleurs, le glycérol pur a une densité proche de 1,2 g.cm$^{-3}$ alors que celle de l'ester se situe autour de 0,9 g.cm$^{-3}$. En présence de peu de méthanol, la phase contenant majoritairement du glycérol est donc plus dense que la phase ester et a ainsi tendance à se placer en dessous de cette dernière sous l'effet de la gravité. La phase ester constitue donc la phase surnageante.

Le glycérol selon l'invention peut également se trouver sous forme de glycérine. La glycérine peut être définie comme étant un mélange comportant au moins 50 % en poids de glycérol ainsi que de l'eau, méthanol, des sels, des matières organiques sans glycérine.

Les huiles végétales et/ou animales qui sont utilisées peuvent être toutes huiles connues de l'homme du métier, par exemple de l'huile de colza, de palme, de tournesol, de soja, de copra, de ricin, ainsi que des huiles d'origine animales comme le suif ou encore des huiles issues d'algues.

L'alcool mis en oeuvre est généralement un mono-alcool aliphatique. De préférence, l'alcool est essentiellement constitué par du méthanol et/ou de l'éthanol

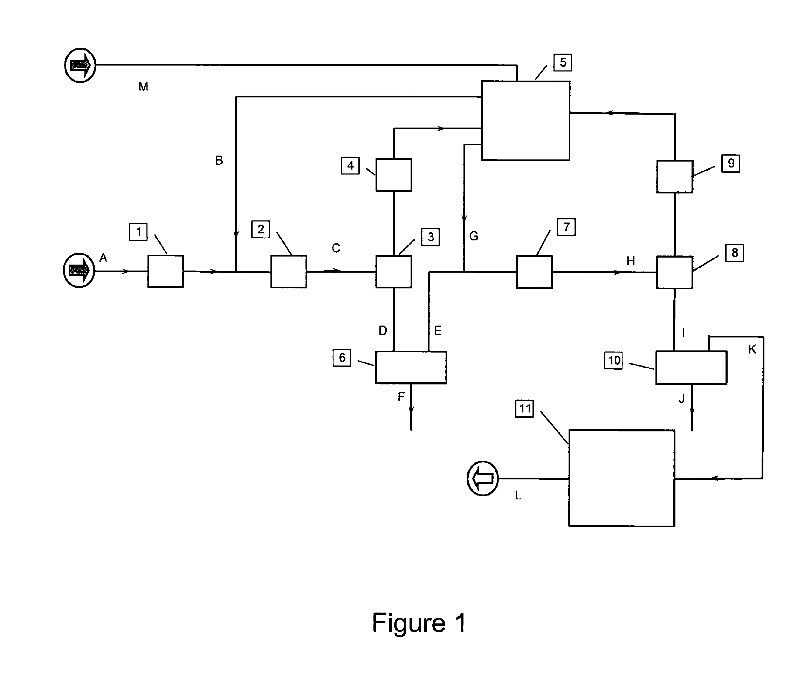

Le procédé Esterfip-H™ tel que décrit dans l'art antérieur est représenté schématiquement sur la Figure 1.

L'huile à traiter ou huile de charge (A) est envoyée dans un sécheur sous vide (1) de façon à obtenir une teneur en eau inférieure à 700 ppm en masse. On appelle dans la suite du texte "huile séchée" l'huile de charge ayant subi ce traitement.

L'huile séchée est mélangée avec du méthanol de recycle (B). Le mélange obtenu contenant entre 20 % et 80 % massique, et de préférence entre 45 % et 55 % massique d'huile est comprimé entre 30.10$^5$ et 80.10$^5$ Pa et préférentiellement entre 40.10$^5$ et 70.10$^5$ Pa et chauffé 423 et 493°K et préférentiellement entre 433 et 473°K, passe de bas en haut dans un réacteur tubulaire (2) contenant un lit fixe d'un catalyseur à base d'aluminate de zinc sous forme d'extrudés. La VVH, c'est à dire le rapport entre le débit volumique horaire d'huile à traiter et le volume de catalyseur est comprise entre 1,2 h$^{-1}$ et 0,1 h$^{-1}$ et préférentiellement entre 0,7 et 0,3 h$^{-1}$.

La conversion en huile obtenue dans ces conditions est d'au moins 90% masse, généralement d'au moins 92% en masse. En sortie du réacteur (2), le mélange (C) contient majoritairement des esters méthyliques, du méthanol, du glycérol et des glycérides partiellement convertis (monoglycérides, diglycérides et triglycérides), ainsi que des traces d'eau, impureté présente dans la charge. Ce mélange subit une phase de détente puis d'évaporation du méthanol en excès dans un évaporateur (3) à une pression voisine de $2,5.10^5$ Pa. Le méthanol vapeur est condensé dans un condenseur (4) et recyclé vers les sections réactionnelles via le ballon tampon (5). Cette étape d'évaporation se fait de telle sorte que la teneur en méthanol résiduel dans le mélange soit comprise entre 5 et 25 % massique, de préférence entre 10 et 20 % massique.

Cette teneur est importante car le méthanol agit comme un co-solubilisant de l'ester et de la glycérine naturellement insolubles. Le liquide (D) est alors refroidi jusqu'à 323 °K et décanté dans un ballon décanteur (6) pour séparer la phase supérieure (E), riche en ester alimentant la seconde section réactionnelle et la phase inférieure (F), riche en glycérine qui doit être traitée spécifiquement.

On rajoute à la phase ester issue du ballon de décantation (6) du méthanol (flux G) issu du ballon tampon (5) de façon à obtenir à nouveau un mélange dont la teneur en ester est comprise entre 20 % et 80 % massique et de préférence entre 45 % et 55 % massique. On fait passer le mélange obtenu de bas en haut dans un second réacteur (7) identique au premier, et opérant dans des conditions opératoires très sensiblement voisines de celles du réacteur (2). Dans la plupart des cas, les conditions opératoires des réacteurs (2) et (7) seront pratiquement identiques, et le catalyseur utilisé dans chacun des réacteurs sera le même. La conversion obtenue à l'issue du réacteur (7) permet de satisfaire la spécification en mono-glycérides dans l'ester (H) qui est au maximum de 0,8 % en poids et la spécification en di- et triglycérides dans l'ester (H) qui est au maximum de 0,2 % en poids.

Le méthanol contenu dans le mélange des effluents issus du réacteur (7) est évaporé en au moins une étape et de préférence en deux étapes dans un ensemble d'évaporateurs (8).

La première étape d'évaporation est sensiblement identique à celle effectuée dans l'évaporateur (3), et la seconde étape d'évaporation est réalisée sous vide de façon à ne laisser qu'au maximum 500 ppm masse de méthanol dans le liquide (I), et de préférence 200 ppm, ce qui permet le séchage de l'ester à 200 ppm masse d'eau maximum. On obtient alors après refroidissement et décantation de l'effluent lourd issu du groupe d'évaporateurs (8) dans le décanteur (10), une phase glycérine (J) très pure qui part directement en limite d'unité et une phase ester (K) qui subit un traitement décrit ci-dessous. Le méthanol vapeur issu de l'ensemble d'évaporateurs (8) est condensé dans le condenseur (9) puis recyclé vers les sections réactionnelles via le ballon tampon (5).

L'ester brut (K) issu du décanteur (10) doit être traité de façon à répondre à la spécification concernant la teneur en glycérine totale (libre et liée) qui est au maximum de 0,25 % massique.

Ce traitement de l'ester brut peut se faire de différentes façons.

Par exemple, on peut éventuellement faire passer l'ester dans un moyen de purification (11) qui élimine les dernières traces de glycérine libre insoluble (par exemple par passage dans un coalesceur), et/ou la glycérine dissoute par exemple sur des masses adsorbantes, telles que des résines échangeuses d'ions, dans un adsorbeur non représenté sur la Figure 1. L'ester final (L) part en limite d'unité.

Le traitement de l'ester peut, dans d'autres cas, se faire grâce à une ou plusieurs étapes de lavage à l'eau de l'ester.

La réaction de transestérification consommant une partie du méthanol, il est nécessaire d'introduire du méthanol frais (M) dans le système.

Une partie de ce méthanol frais est envoyée dans le bac de charge de méthanol (5), l'autre partie peut servir à la régénération des résines échangeuses d'ions non représenté sur la Figure (1) au niveau du traitement de l'ester. Pour régénérer les résines saturées en glycérine, on utilise généralement un flux de méthanol pur. Ce méthanol souillé par de la glycérine et un peu d'ester est recyclé dans le procédé en amont du traitement de la glycérine. Puis on passe sur les résines régénérées un flux d'ester pur provenant du stockage de produit fini. L'ester souillé par du méthanol resté adsorbé sur les résines, est recyclé au niveau de l'évaporation de la deuxième section réactionnelle.

La réaction principale mise en oeuvre dans le procédé est une succession de trois réactions équilibrées se déroulant en parallèle, et qui dans la suite du texte seront globalisées sous le terme de "la réaction":

**Réaction 1 :**

L'huile (triglycéride) réagit avec une molécule de méthanol pour donner une molécule d'ester et un diglycéride.

**Réaction 2 :**

Le diglycéride réagit avec une molécule de méthanol pour donner une molécule d'ester et un monoglycéride.

**Réaction 3 :**

Le monoglycéride réagit avec une molécule de méthanol pour donner une molécule d'ester et une molécule de glycérine.

Dans le procédé, le premier réacteur fait au moins 60% de la conversion en huile, préférentiellement au moins 80% et de façon encore plus préférée au moins 90%. Le second réacteur peut à ce titre être considéré comme un réacteur de finition.

A la sortie de ce réacteur, la réaction a atteint ce que l'homme de l'art nomme un équilibre thermodynamique : les concentrations des différents constituants n'évoluent plus avec le temps. Ces concentrations dépendent donc uniquement des concentrations en réactifs et produits à l'entrée du réacteur.

Les réactifs sont le méthanol, les mono-, di- et tri-glycérides, et les produits sont la glycérine et les esters méthyliques.

En sortie du premier réacteur, l'équilibre étant atteint, pour poursuivre la conversion, il faut retirer un des produits, et donc la glycérine est retirée par décantation. Cette décantation est rendue possible par l'évaporation de méthanol. Le flux (E) en sortie du décanteur (6) contient majoritairement des esters méthyliques, du méthanol, du glycérol et des glycérides partiellement convertis (monoglycérides, diglycérides et triglycérides), ainsi que des traces d'eau.

L'optimisation du procédé consiste notamment à diminuer les coûts opératoires, tout en maintenant la qualité des produits obtenus. Ces coûts peuvent être moindres, grâce à une diminution de la quantité de méthanol et/ou de catalyseur nécessaires au procédé. Une amélioration du procédé permettant de diminuer la quantité de méthanol à évaporer et à condenser permet notamment de diminuer la consommation de vapeur et de moyens de refroidissement nécessaires lors de ces étapes, et constitue par conséquent un gain très favorable pour l'ensemble du procédé.

La présente invention se place dans ce cadre et propose une amélioration du procédé permettant de réduire de façon importante les coûts opératoires.

## RÉSUMÉ DE L'INVENTION

La présente invention décrit un procédé de production d'esters alkyliques d'acides gras et de glycérine, mettant en oeuvre un ensemble de réactions de transestérification entre une huile végétale ou animale constituée de triglycérides et un monoalcool aliphatique en présence d'un catalyseur solide hétérogène, dans lequel on réalise une étape de séparation de l'ester produit et du glycérol lié défini comme étant les triglycérides partiellement convertis, ladite séparation se faisant par l'intermédiaire d'une membrane.

L'invention décrit l'installation dans laquelle on met en oeuvre ledit procédé de production d'esters alkyliques.

## DESCRIPTION DES DESSINS

La Figure 1 donne une représentation schématique du procédé Esterfip-H™ tel que décrit dans l'art antérieur.

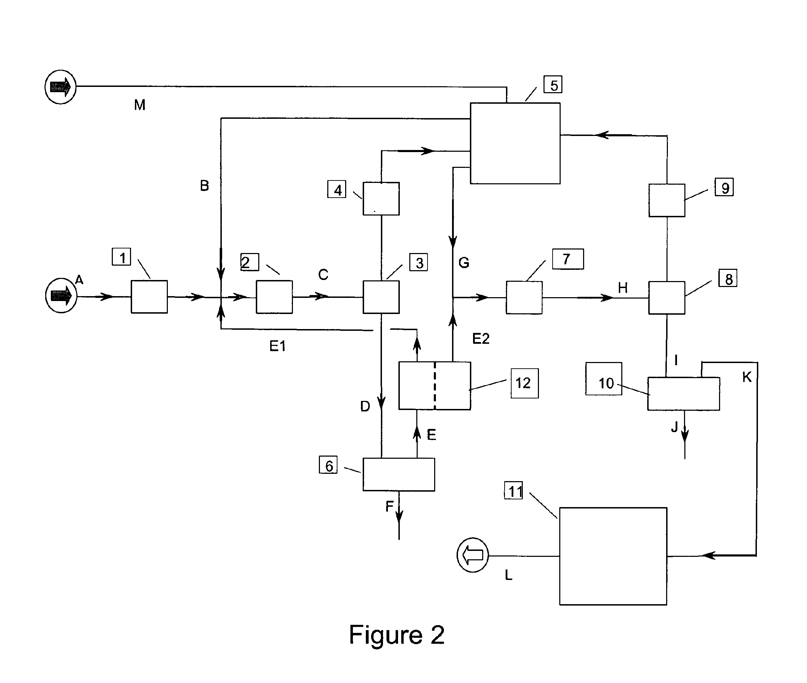

La Figure 2 donne une représentation schématique du procédé Esterfip-H™ amélioré selon la présente invention dans laquelle le rétentat obtenu après l'étape de séparation membranaire est envoyé dans le premier réacteur et le perméat (E2) est envoyé dans une seconde étape réactionnelle.

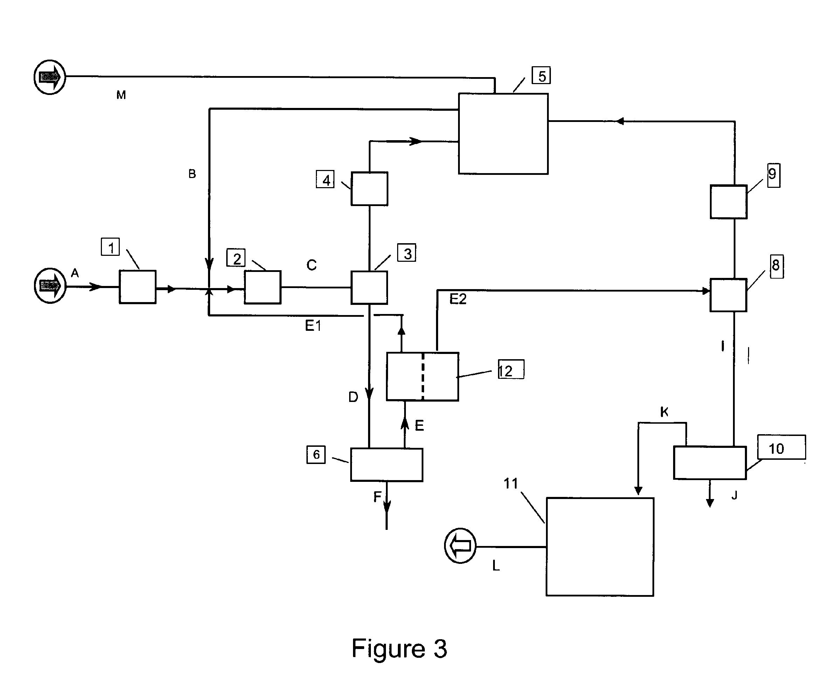

La Figure 3 donne une représentation schématique du procédé Esterfip-H™ amélioré selon la présente invention dans laquelle le rétentat obtenu après l'étape de séparation membranaire est envoyé dans le premier réacteur et le perméat obtenu après l'étape de séparation membranaire est conforme aux spécifications en ce qui concerne les teneurs en glycérides peu ou pas convertis et est envoyé directement vers une section de purification pour éliminer le méthanol et la glycérine sans étape de conversion supplémentaire.

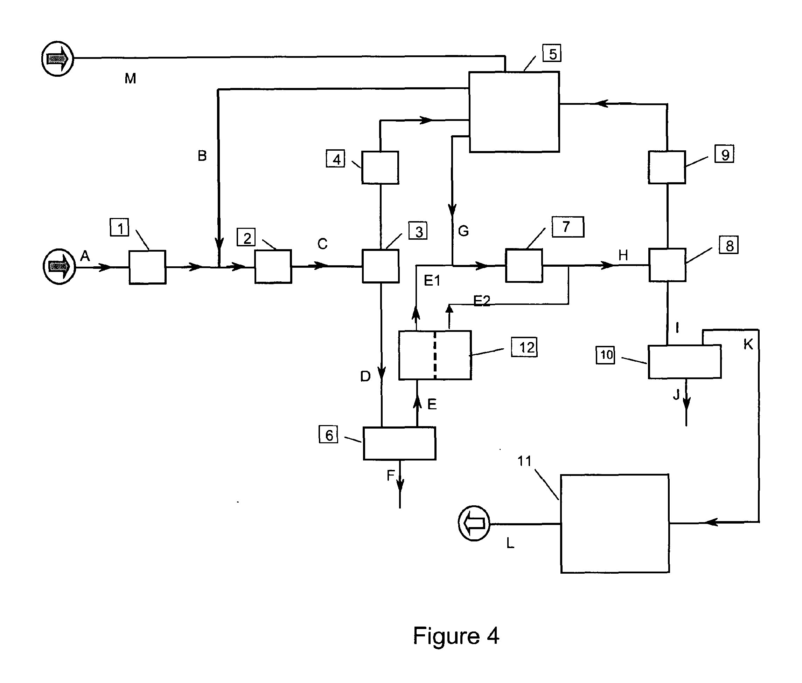

La Figure 4 donne une représentation schématique du procédé Esterfip-H™ amélioré selon la présente invention dans laquelle le rétentat obtenu après l'étape de séparation membranaire est envoyé vers le second réacteur de transestérification et le perméat, conforme aux spécifications en ce qui concerne les teneurs en glycérides peu ou pas convertis, est envoyé directement vers une section de purification pour éliminer le méthanol et la glycérine sans étape de conversion supplémentaire.

## DESCRIPTION DÉTAILLÉE DE L'INVENTION

La présente invention décrit un procédé de production d'esters alkyliques d'acides gras et de glycérine, mettant en oeuvre un ensemble de réactions de transestérification entre une huile végétale ou animale et un monoalcool aliphatique en présence d'un catalyseur solide hétérogène de manière à obtenir un effluent comportant au moins des esters alkyliques, du glycérol libre, du glycérol lié et de l'alcool, dans lequel on réalise au moins une étape de séparation d'au moins une portion de l'effluent pour séparer l'ester produit et le glycérol lié, ladite séparation consistant en une séparation membranaire, mettant en oeuvre au moins une membrane perméable à l'eau, l'alcool, l'ester alkylique, la glycérine et peu ou pas perméable aux mono-, di- et tri-glycérides, ayant lieu à l'issue d'une première étape réactionnelle mise en oeuvre dans un premier réacteur de conversion (2) et opérée sur un flux E contenant majoritairement des esters alkyliques, de l'alcool, du glycérol, des glycérides partiellement convertis et des traces d'eau, ledit flux E étant obtenu après séparation de la glycérine produite.

A l'issue de cette étape de séparation, on obtient un rétentat (E1) et un perméat (E2).

Ladite étape de séparation est opérée dans une unité de séparation membranaire, constituée d'au moins une membrane.

Lors de l'étape de séparation membranaire, une partie des glycérides pas ou partiellement convertis sont retenus en amont de la membrane dans le rétentat (E1) et par conséquent, la quantité de glycérine liée présente dans le perméat (E2) envoyé vers le second réacteur de conversion est moins importante. Cette glycérine liée, lorsqu'elle est libérée dans le réacteur, influence l'équilibre de façon défavorable. Ainsi, le fait d'extraire des glycérides partiellement convertis permet, pour un même équilibre, de réduire considérablement la quantité de méthanol nécessaire à l'entrée du second réacteur. En conséquence, la quantité de méthanol à évaporer et à condenser en sortie de réacteur est donc diminuée et la consommation de vapeur et de moyens de refroidissement nécessaires pour ces étapes le sont également.

L'étape de séparation membranaire est opérée selon un mode de filtration de type "osmose inverse" ou "nanofiltration". Dans la présente invention, ces opérations de séparation membranaire sont considérées comme équivalentes en ce sens qu'elles mettent en oeuvre une séparation de type tamisage moléculaire au travers d'un film dense constituant la couche sélective de la membrane et que le flux circulant au travers de la membrane est induit par une différence de pression mécanique entre la face amont et la face aval de la membrane. Les composés traversant de manière sélective la membrane sont donc les constituants de plus petite taille contenus dans la charge à séparer. Parmi les matériaux constitutifs de la couche sélective adaptés au type de séparation envisagée dans la présente invention, l'homme de l'art peut citer les polymères, en particulier les polymères vitreux, tels que les polyimides, les polyamides, les polysulfones ou les polyéthersulfones.

L'étape de séparation membranaire est opérée sur un large éventail de température, variant par exemple de -30°C à 150°C, et de manière préférée entre la température ambiante et 90°C.

Les différences de pression entre les deux faces d'au moins une des membranes constituant l'unité de séparation membranaire et adaptée pour la séparation visée sont celles classiquement rencontrées dans les domaines de l'osmose inverse et de la nanofiltration, c'est-à-dire comprises entre 1 et 15 MPa, et de manière préférée entre 2 et 8 MPa.

Le taux d'extraction d'une membrane est défini comme étant le ratio entre le flux de perméat (soit la fraction de charge ayant traversée la membrane) et le flux de charge en entrée de la membrane. De manière préférée, on choisit une unité de séparation membranaire dont le taux d'extraction est d'au moins 50%.

La sélectivité d'une membrane est définie par le taux de rejet R (ou taux de rétention) de l'espèce (ici le glycérol lié) que la membrane est censée retenir :

$$R = 1 - \frac{Cp}{Co}$$

où Co est la concentration en glycérol lié dans la charge en entrée et Cp la concentration en glycérol lié dans le perméat. Le taux de rétention de l'unité de séparation membranaire en glycérol lié est au moins supérieur à 30%, et de manière préférée supérieur à 50%.

En fonction des performances de séparation de la membrane utilisée, plusieurs schémas de procédés peuvent être envisagés.

Différents modes de réalisation conformes à la présente invention sont reproduits sur les Figures 2 à 4. Les différents éléments décrits sur ces figures portent des références numérotées identiques à ceux décrits sur la figure 1, représentative de l'art antérieur.

L'étape de séparation membranaire peut être suivie d'une seconde étape réactionnelle mise en oeuvre dans un second réacteur de conversion (7).

Selon un premier mode de réalisation représenté sur la Figure 2, le flux E est envoyé vers l'unité de séparation membranaire (12), en sortie de laquelle on obtient deux flux E1 et E2. Le flux E1 correspondant au rétentat (c'est-à-dire à l'ensemble des composés ne traversant pas la membrane) contenant la majorité des tri- et di- glycérides non convertis est recyclé en entrée du premier réacteur de conversion (2) et le perméat (E2) est envoyé vers le second réacteur de conversion (7). Le fait de recycler le flux E1 en entrée du premier réacteur (2) avec l'huile de charge n'a qu'une influence minime sur l'équilibre car le premier réacteur (2) effectue la majeure partie de la conversion, sur une charge constituée très majoritairement de triglycérides. La quantité de glycérine liée recyclée est négligeable devant la quantité de glycérine liée entrante. Le perméat (E2) contenant l'ester, le méthanol et une teneur plus faible en mono-, di- et tri-glycérides est envoyé en entrée du second réacteur (7). Le débit de méthanol envoyé au réacteur (2) peut être considérablement réduit. En effet, le fait d'avoir une unité de séparation membranaire qui recycle les glycérides peu ou pas convertis permet de dégrader la conversion du réacteur (2) en baissant le ratio méthanol sur huile sans conséquences sensibles sur l'effluent envoyé vers le second réacteur de conversion (7). La baisse du ratio méthanol sur huile en entrée du premier réacteur de conversion (2) a un double effet sur la consommation d'utilité. La baisse du débit de la charge au premier réacteur (2) induit une diminution de la charge thermique nécessaire pour chauffer ce flux aux conditions de la réaction. De plus, la quantité de méthanol évaporée dans l'évaporateur (3) est ainsi réduite d'où une diminution de la charge thermique nécessaire pour refroidir et condenser le méthanol au niveau du condenseur (4). Par conséquent, les utilités du procédé peuvent être considérablement réduites.

Selon un deuxième mode de réalisation de la présente invention, l'étape de séparation membranaire réalisée dans l'unité de séparation (12) est telle qu'il est possible de récupérer un perméat (E2) conforme aux spécifications du biodiesel au niveau de la teneur en glycérides. Il est alors possible d'envoyer le flux (E2) sans étape de conversion supplémentaire vers des étapes optionnelles de purification. Le flux E2 peut alors être envoyé vers la section de purification qui comprend éventuellement un moyen d'évaporation de l'alcool (8), éventuellement un moyen de séparation de la glycérine insoluble (10), et éventuellement un moyen de purification finale (11) permettant d'éliminer les traces de glycérine libre insoluble et la glycérine dissoute, chacun de ces moyens pouvant être pris seuls ou en combinaison. De façon préférée, dans ce deuxième mode de réalisation et selon le schéma représenté sur la Figure 3, le rétentat (E1) enrichi en glycérides mais présentant une concentration en ester qui dépend du taux d'extraction de la membrane et qui peut être éventuellement élevée, peut alors être recyclé vers l'entrée du premier réacteur de conversion (2). Le perméat (E2) peut être envoyé directement vers une section de purification comprenant éventuellement un moyen d'évaporation de l'alcool (8), éventuellement un moyen de séparation de la glycérine insoluble (10), et éventuellement un moyen de purification finale (11) permettant d'éliminer les traces de glycérine libre insoluble et la glycérine dissoute. Le perméat E2 ne subit ainsi pas d'étape de conversion supplémentaire.

De façon très préférée dans ce deuxième mode de réalisation et selon le schéma représenté sur la Figure 4, le rétentat (E1) peut être envoyé vers un second réacteur de transestérification (7), notamment de taille plus réduite que dans le schéma de l'art antérieur décrit à la Figure 1. La taille du réacteur se trouve d'autant plus réduite que le taux d'extraction de la membrane est élevé. Le perméat (E2), conforme aux spécifications en ce qui concerne les teneurs en glycérides peu ou pas convertis, est envoyé directement en aval du second réacteur de conversion (7). Il est donc mélangé avec l'effluent sortant du second réacteur (7) avant d'être envoyé vers la section de purification comprenant éventuellement un moyen d'évaporation de l'alcool (8), éventuellement un moyen de séparation de la glycérine insoluble (10), et/ou éventuellement un moyen de purification finale (11)

La présente invention décrit également l'installation dans laquelle on met en oeuvre le procédé. Cette installation comprend :

- au moins un moyen de séchage (1) dans lequel on introduit l'huile de charge,
- au moins un premier réacteur de transestérification (2) à l'entrée duquel se trouve au moins une conduite d'entrée de l'huile de charge séchée et au moins une conduite d'entrée d'alcool,
- au moins un moyen d'évaporation (3) de l'alcool, placé après le premier réacteur de transestérification, en sortie duquel se trouve au moins une conduite vers un moyen de condensation (4) de l'alcool évaporé, et au moins une conduite par laquelle on extrait la phase débarrassée du méthanol vapeur,
- au moins un moyen de séparation (6) de la phase riche en glycérine et de la phase riche en esters,
- au moins une unité de séparation membranaire (12) située après le moyen de séparation (6) et dans laquelle est envoyé le flux correspondant à la phase riche en esters, les flux obtenus en sortie de ladite unité de séparation étant le rétentat (E1) comprenant les mono-, di- et tri-glycérides retenus par ladite unité et le perméat (E2) comprenant l'alcool, l'eau, l'ester alkylique et la glycérine,
- éventuellement un deuxième réacteur de transestérification placé en aval de l'unité de séparation membranaire,
- au moins moyen de collecte (5) de l'alcool frais et/ou de recycle,
- éventuellement une section de purification comprenant éventuellement un moyen d'évaporation de l'alcool (8), éventuellement un moyen de séparation de la glycérine insoluble (10), et/ou éventuellement un moyen de purification finale (11).

L'unité de séparation membranaire peut être constituée de plusieurs étages de filtration placés en série, en parallèle ou selon tout arrangement connu de l'homme de l'art. Ainsi, dans une unité de séparation mettant en oeuvre deux étages de filtration en série, le second étage peut être utilisé pour filtrer le perméat issu du premier étage de séparation membranaire et par conséquent peut permettre d'améliorer la séparation.

Des membranes identiques ou différentes peuvent être utilisées à chaque étage de filtration.

Selon le mode de réalisation décrit sur la Figure 2, l'installation comprend en outre :

- au moins une conduite en sortie de l'unité de séparation (12) dans laquelle le rétentat (E1) est envoyé en amont du premier réacteur de transestérification,
- au moins une conduite en sortie de l'unité de séparation (12) dans laquelle le perméat (E2) est mélangé avec de l'alcool de recycle provenant du moyen de stockage (5) avant d'être envoyé dans le deuxième réacteur de transestérification.

Selon le mode de réalisation décrit sur la Figure 3, l'installation comprend en outre :

- au moins une conduite en sortie de l'unité de séparation (12) dans laquelle le rétentat (E1) est envoyé en amont du premier réacteur de transestérification, et
- au moins une conduite en sortie de l'unité de séparation (12) dans laquelle le perméat (E2) est directement envoyé vers ladite section de purification.

Selon le mode de réalisation décrit sur la Figure 4, l'installation comprend en outre :

- au moins une conduite en sortie de l'unité de séparation (12) dans laquelle le rétentat (E1) est envoyé en amont du second réacteur de transestérification (7), et
- au moins une conduite en sortie de l'unité de séparation (12) dans laquelle le perméat (E2) est mélangé avec le flux sortant du second réacteur de transestérification (7) avant d'être envoyé dans ladite section de purification.

## EXEMPLES

Dans les exemples suivants, le méthanol et le glycérol pour lesquels la membrane n'est pas sélective ne sont pas pris en compte dans les bilans matière. De plus, les différents flux A, B, E, G et L correspondent à ceux indiqués sur les figures et sont donc respectivement l'huile de charge, le méthanol de recycle introduit avant le premier réacteur, la phase riche en esters issue du premier réacteur, le méthanol de recycle introduit avant le second réacteur et l'ester final.

**Exemple 1 (non conforme à l'invention)**

Cet exemple présente le schéma de base du procédé ESTERFIP-H™, tel que décrit sur la Figure 1. Le bilan matière sur les différents flux d'intérêt circulant dans ce procédé est décrit dans le tableau n°1.

Tableau n°1. Bilan matière sur un procédé ESTERFIP-H™ conventionnel

|  | A | B | E | G | L |
|---|---|---|---|---|---|
| Flux cumulé glycérides + ester (t/h) | 10 | - | 10 | - | 10 |
| % triglycérides (m/m) | 100 | - | 2.4 | - | 0,2 |
| % diglycérides (m/m) | - | - | 1.0 | - | 0,2 |
| % monoglycérides | - | - | 2.2 | - | 0,8 |
| % ester | - | - | 88.5 | - | 98,8 |
| Flux méthanol (t/h) | - | 9 | 0.6 | 5.4 | - |

Les coûts opératoires relatifs à l'emploi du méthanol, ainsi que la quantité de catalyseur requise dans les deux réacteurs pour atteindre les spécifications en glycérides, sont décrits dans le tableau n°2.

Tableau n°2. Utilités consommées pour la gestion du méthanol dans un procédé ESTERFIP-H™ conventionnel et quantité de catalyseur requise

| Utilité | Consommation horaire |
|---|---|
| Énergie de refroidissement | W (kW) |
| Énergie de chauffe | X (kW) |
| Volume catalyseur (réacteur n°1) | Y (t) |
| Volume catalyseur (réacteur n°2) | Z (t) |

**Exemple 2 (conforme à l'invention)**

Cet exemple est conforme au mode de réalisation décrit sur la Figure 2. Les performances d'un étage de séparation membranaire sont présentées dans le tableau n°3. Il s'agit typiquement de performances d'une membrane présentant une couche sélective à base de polyimide ayant subi un post traitement thermique.

Tableau n°3. Performances de la membrane de fractionnement de glycérides

| Critère | Performance |
|---|---|
| Taux d'extraction | 75% |
| Taux de rejet de triglycérides | 73% |
| Taux de rejet de diglycérides | 64% |
| Taux de rejet de monoglycérides | 40% |
| Taux de rejet de l'ester | 0% |

Le bilan des flux circulant dans le procédé selon la présente invention est détaillé dans le tableau n°4 et les consommations en utilités associées sont décrites dans le tableau n°5. On peut constater que les utilités dans ce nouveau schéma de procédé sont réduites par rapport au schéma de l'art antérieur tel que décrit dans l'Exemple 1.

Tableau n°4. Bilan matière sur un procédé ESTERFIP-H™ équipé d'un étage de séparation membranaire (tel que décrit dans la Figure 2)

| | A | B | E | E1 | E2 | G | L |
|---|---|---|---|---|---|---|---|
| Flux cumulé glycérides + ester (t/h) | 10 | - | 13.8 | 3.5 | 10.3 | - | 10 |
| % triglycérides (m/m) | 100 | - | 8.1 | 25.9 | 2.2 | - | 0,2 |
| % diglycérides (m/m) | - | - | 2.8 | 8.2 | 1.0 | - | 0,2 |
| % monoglycérides | - | - | 3.7 | 8.3 | 2.3 | - | 0,8 |
| % ester | - | - | 83.1 | 57.7 | 91.6 | - | 98,8 |
| Flux méthanol (t/h) | - | 5.4 | 0.2 | - | - | 5.2 | - |

Tableau n°5. Utilités consommées pour la gestion du méthanol dans un procédé ESTERFIP-H™ équipé d'un étage de séparation membranaire (tel que décrit dans la figure n°2)

| Utilité | Consommation horaire |
|---|---|
| Énergie de refroidissement | 0.746 W (kW) |
| Énergie de chauffe | 0.826 X (kW) |
| Volume catalyseur (réacteur n°1) | Y (t) |
| Volume catalyseur (réacteur n°2) | Z (t) |

**Exemple 3 (selon l'invention)**

Cet exemple correspond au mode de réalisation décrit sur la Figure 4. Les performances d'un étage de séparation membranaire sont identiques à celles utilisées dans l'Exemple 2. L'unité de séparation membranaire met en oeuvre deux étages de filtration en série, le second étage étant utilisé pour filtrer le perméat issu du premier étage de séparation membranaire. Comme indiqué sur le tableau n°6, les concentrations en glycérides dans le perméat (flux E2, Figure 4) du second étage de séparation membranaire sont conformes aux spécifications de teneur en glycérides dans un diester commercial (tableau n°6). Ce flux E2 ne nécessite donc pas de passage dans un second réacteur de transéstérification. Le flux E1 constitué par le mélange des deux rétentats respectifs des deux étages de filtration étant enrichi en glycérides nécessite un post-traitement dans un second réacteur (référence 7 dans figure 4) afin d'atteindre les spécifications en glycérides. Toutefois, vu la teneur réduite en glycérides et la réduction forte de flux entrant dans ce second réacteur, la quantité de méthanol à mettre en oeuvre à cette étape sera réduit par rapport au cas de référence. Ceci conduit naturellement à une réduction des utilités requises pour atteindre les spécifications (cf. tableau n°7). De plus, vue la teneur réduite en glycérides et la réduction forte de flux entrant dans ce second réacteur, le procédé nécessite la mise en oeuvre de 50% de catalyseur en moins dans ce deuxième réacteur (7) par rapport à l'art antérieur (Exemple 1).

Tableau n°6. Bilan matière sur un procédé ESTERFIP-H™ équipé d'un étage de séparation membranaire (tel que décrit dans la figure n°4)

|  | A | B | E | E1 | E2 | G | L |
|---|---|---|---|---|---|---|---|
| Flux cumulé glycérides + ester (t/h) | 10 | - | 10 | 4.7 | 5.3 | - | 10 |
| % triglycérides (m/m) | 100 | - | 2.4 | 5.3 | 0,2 | - | 0,2 |
| % diglycérides (m/m) | - | - | 1.0 | 2.1 | 0,2 | - | 0,2 |
| % monoglycérides | - | - | 2.2 | 3.9 | 0,8 | - | 0,8 |
| % ester | - | - | 88.5 | 88.6 | 88.4 | - | 98,8 |
| Flux méthanol (t/h) | - | 9 | 0.6 | - | - | 3.4 | - |

Tableau n°7. Utilités consommées pour la gestion du méthanol dans un procédé ESTERFIP-H™ équipé d'un étage de séparation membranaire (tel que décrit dans la figure n°4)

| Utilité | Consommation horaire |
|---|---|
| Énergie de refroidissement | 0.844 W (kW) |
| Énergie de chauffe | 0.899 X (kW) |
| Volume catalyseur (réacteur n°1) | Y (t) |
| Volume catalyseur (réacteur n°2) | 0.5 Z (t) |

**Revendications**

1. Procédé de production d'esters alkyliques d'acides gras et de glycérine, mettant en oeuvre un ensemble de réactions de transestérification entre une huile végétale ou animale et un monoalcool aliphatique en présence d'un catalyseur solide hétérogène de manière à obtenir un effluent comportant au moins des esters alkyliques, du glycérol libre, du glycérol lié et de l'alcool, dans lequel on réalise au moins une étape de séparation d'au moins une portion de l'effluent pour séparer l'ester produit et le glycérol lié, ladite séparation mettant en oeuvre au moins une membrane perméable à l'eau, l'alcool, l'ester alkylique, la glycérine et peu ou pas perméable aux mono-, di- et tri-glycérides et ayant lieu à l'issue d'une première étape réactionnelle mise en oeuvre dans un premier réacteur de conversion (2) et opérée sur un flux E contenant majoritairement des esters alkyliques, de l'alcool, du glycérol, des glycérides partiellement convertis et des traces d'eau, ledit flux E étant obtenu après séparation de la glycérine produite.

2. Procédé selon la revendication précédente dans lequel à l'issue de l'étape de séparation membranaire on obtient un rétentat (E1) et un perméat (E2).

3. Procédé selon l'une des revendications précédentes dans lequel l'étape de séparation membranaire est opérée dans une unité de séparation membranaire constituée d'au moins une membrane, à une température variant de -30°C à 150°C, et de manière préférée entre la température ambiante et 90°C.

**4.** Procédé selon l'une des revendications précédentes dans lequel la différence de pression entre les deux faces d'au moins une des membranes constituant l'unité de séparation membranaire est comprise entre 1 et 15 MPa, et de manière préférée entre 2 et 8 MPa.

**5.** Procédé selon l'une des revendications précédentes dans lequel le taux d'extraction de l'unité de séparation membranaire est d'au moins 50%.

**6.** Procédé selon l'une des revendications précédentes dans lequel le taux de rétention de l'unité de séparation membranaire en glycérol lié est au moins supérieur à 30%, et de manière préférée supérieur à 50%.

**7.** Procédé selon l'une des revendications précédentes dans lequel l'étape de séparation membranaire est suivie d'une seconde étape réactionnelle mise en oeuvre dans un second réacteur de conversion (7).

**8.** Procédé selon la revendication 7 dans lequel le rétentat (E1) contenant la majorité des tri- et di-glycérides non convertis est recyclé en entrée du premier réacteur de conversion (2) et le perméat (E2) est envoyé vers le second réacteur de conversion (7).

**9.** Procédé selon la revendication 7 dans lequel dans le rétentat (E1) est envoyé vers le second réacteur et le perméat (E2) est mélangé avec l'effluent sortant du second réacteur (7) avant d'être envoyé vers la section de purification comprenant éventuellement un moyen d'évaporation de l'alcool (8), éventuellement un moyen de séparation de la glycérine insoluble (10), et/ou éventuellement un moyen de purification finale (11).

**10.** Procédé selon l'une des revendications 1 à 6 dans lequel le perméat (E2), dont la teneur en glycérides est conforme aux spécifications relatives aux teneurs en glycérides peu ou pas convertis, est envoyé directement vers une section de purification comprenant éventuellement un moyen d'évaporation de l'alcool (8), éventuellement un moyen de séparation de la glycérine insoluble (10), et/ou éventuellement un moyen de purification finale (11).

**11.** Installation dans laquelle on met en oeuvre le procédé selon l'une des revendications précédentes **caractérisée en ce qu'**elle comprend :

- au moins un moyen de séchage (1) dans lequel on introduit l'huile de charge,
- au moins un premier réacteur de transestérification (2) à l'entrée duquel se trouve au moins une conduite d'entrée de l'huile de charge séchée et au moins une conduite d'entrée d'alcool,
- au moins un moyen d'évaporation (3) de l'alcool, placé après le premier réacteur de transestérification, en sortie duquel se trouve au moins une conduite vers un moyen de condensation (4) de l'alcool évaporé, et au moins une conduite par laquelle on extrait la phase débarrassée du méthanol vapeur,
- au moins un moyen de séparation (6) de la phase riche en glycérine et de la phase riche en esters,
- au moins une unité de séparation membranaire (12) située après le moyen de séparation (6) et dans laquelle est envoyé le flux correspondant à la phase riche en esters, les flux obtenus en sortie de ladite unité de séparation étant le rétentat (E1) comprenant les mono-, di- et tri-glycérides retenus par ladite unité et le perméat (E2) comprenant l'alcool, l'eau, l'ester alkylique et la glycérine,
- éventuellement un deuxième réacteur de transestérification placé en aval de l'unité de séparation membranaire,
- au moins un moyen de collecte (5) de l'alcool frais et/ou de recycle,
- éventuellement une section de purification comprenant éventuellement un moyen d'évaporation de l'alcool (8), éventuellement un moyen de séparation de la glycérine insoluble (10), et/ou éventuellement un moyen de purification finale (11).

**12.** installation selon la revendication 11 dans laquelle l'unité de séparation membranaire est constituée de plusieurs étages de filtration placés en série ou en parallèle, chaque étage de filtration mettant en oeuvre des membranes identiques ou différentes.

**13.** Installation selon l'une des revendications 11 ou 12 **caractérisée en ce qu'**elle comprend en outre :

- au moins une conduite en sortie de l'unité de séparation (12) dans laquelle le rétentat (E1) est envoyé en amont du premier réacteur de transestérification,
- au moins une conduite en sortie de l'unité de séparation (12) dans laquelle le perméat (E2) est mélangé avec de l'alcool de recycle provenant du moyen de stockage (5) avant d'être envoyé dans le deuxième réacteur de transestérification.

**14.** Installation selon l'une des revendications 11 ou 12 **caractérisée en ce qu'**elle comprend en outre :

- au moins une conduite en sortie de l'unité de séparation (12) dans laquelle le rétentat (E1) est envoyé en amont du premier réacteur de transestérification, et
- au moins une conduite en sortie de l'unité de séparation (12) dans laquelle le perméat (E2) est directement envoyé vers ladite section de purification.

**15.** Installation selon l'une des revendications 11 ou 12 **caractérisée en ce qu'**elle comprend en outre :

- au moins une conduite en sortie de l'unité de séparation (12) dans laquelle le rétentat (E1) est envoyé en amont du second réacteur de transestérification (7), et
- au moins une conduite en sortie de l'unité de séparation (12) dans laquelle le perméat (E2) est mélangé avec le flux sortant du second réacteur de transestérification (7) avant d'être envoyé dans ladite section de purification.

Figure 1

Figure 2

Figure 3

EP 2 202 288 A1

Figure 4

Europäisches
Patentamt

European
Patent Office

Office européen
des brevets

**RAPPORT DE RECHERCHE EUROPEENNE**

Numéro de la demande

EP 09 29 0890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2008/250700 A1 (TREMBLAY ANDRE YVES [CA] ET AL) 16 octobre 2008 (2008-10-16) * alinéa [0006] - alinéa [0012]; exemples 1,2 * * alinéas [0044], [0066], [0069], [0097], [0112], [0123]; revendications 80,89,92,101; tableau 6 * ----- | 1-10 | INV. C11C3/04 C10L1/02 B01D61/14 B01J19/24 |
| X | EP 1 616 853 A (INST FRANCAIS DU PETROLE [FR]) 18 janvier 2006 (2006-01-18) * alinéa [0056] - alinéa [0070]; revendications 1,16-18; figure 5 * * alinéa [0026] * ----- | 11-15 | |
| X | TREMBLAY A Y; CAO P; DUBE M A: "Biodiesel production using ultralow catalyst concentrations" ENERGY AND FUELS, vol. 22, no. 4, juillet 2008 (2008-07), pages 2748-2755, XP002540556 * page 2749, colonne de droite, alinéa 6 - page 2751, colonne de gauche, alinéa 1; figure 2; tableaux 4,5 * ----- | 1-10 | |
| X | DUBE ET AL: "Biodiesel production using a membrane reactor" BIORESOURCE TECHNOLOGY, ELSEVIER, GB, vol. 98, no. 3, 1 février 2007 (2007-02-01), pages 639-647, XP005656277 ISSN: 0960-8524 * page 646, colonne de gauche, alinéa 1 - alinéa 3; figures 3,5,6 * * abrégé * ----- -/-- | 1-10 | DOMAINES TECHNIQUES RECHERCHES (IPC) C11C C10L B01D B01J |

Le présent rapport a été établi pour toutes les revendications

| Lieu de la recherche | Date d'achèvement de la recherche | Examinateur |
|---|---|---|
| La Haye | 27 avril 2010 | Saettel, Damien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 09 29 0890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HE H Y; GUO X; ZHU S L: "Comparison of membrane extraction with traditional extraction methods for biodiesel production" JOURNAL OF THE AMERICAN OIL CHEMISTS' SOCIETY, vol. 83, no. 5, mai 2006 (2006-05), pages 457-460, XP002540557 * page 459, colonne de droite, alinéa 3 - page 460, colonne de gauche, alinéa 1; tableau 1 * * page 458, colonne de gauche, alinéa 5 * ----- | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 27 avril 2010 | Saettel, Damien |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 09 29 0890

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-04-2010

| Document brevet cité au rapport de recherche | | Date de publication | Membre(s) de la famille de brevet(s) | | Date de publication |
|---|---|---|---|---|---|
| US 2008250700 | A1 | 16-10-2008 | BR | PI0607977 A2 | 27-10-2009 |
| | | | CA | 2599499 A1 | 31-08-2006 |
| | | | WO | 2006089429 A1 | 31-08-2006 |
| | | | CN | 101180383 A | 14-05-2008 |
| | | | EP | 1866395 A1 | 19-12-2007 |
| | | | KR | 20070116613 A | 10-12-2007 |
| EP 1616853 | A | 18-01-2006 | BR | PI0504143 A | 21-02-2006 |
| | | | FR | 2872812 A1 | 13-01-2006 |
| | | | US | 2006014974 A1 | 19-01-2006 |
| | | | US | 2006076271 A1 | 13-04-2006 |

EPO FORM P0460

Pour tout renseignement concernant cette annexe : voir Journal Officiel de l'Office européen des brevets, No.12/82

**EP 2 202 288 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1352893 A